# EUROPEAN PATENT APPLICATION

(11) **EP 3 859 430 A1**
(43) Date of publication of application: **04.08.2021**
(21) Application number: 19865105.1
(22) Date of filing: 27.09.2019
(51) Int. Cl.: G02C 7/02, B29C 39/02, C08G 18/38, G02B 3/00, B29K 81/00, B29L 11/00

(54) **OPTICAL MEMBER RESIN PRODUCTION METHOD**

(30) Priority: 28.09.2018 JP 2018185487
(71) Applicant: Hoya Lens Thailand Ltd., Pathumthani 12130 (TH)
(72) Inventor: OHNISHI, Tomofumi, Tokyo 160-8347 (JP); SANO, Yoshio, Tokyo 160-8347 (JP)
(74) Representative: Gerauer, Marc Philippé
(86) International application number: PCT/JP2019/038239
(87) International publication number: WO 2020/067462

(57) **Abstract**

A method for producing an optical component resin including a first pressure-reduction step in which a mixture containing a polyisocyanate component and a polythiol component is disposed under a reduced pressure, a second pressure-reduction step in which a release agent is added after the first pressure-reduction step, and the mixture is further disposed under a reduced pressure, and a polymerization step in which the mixture is polymerized.

## Description

### Technical Field

The present disclosure relates to a method for producing a resin for an optical component such as a spectacle lens.

### Background Art

A resin lens is advantageous in that it is lighter than a lens formed of an inorganic material such as inorganic glass, hard to crack, and stainable. Therefore, it is currently the main stream to use a resin lens as an optical component such as a spectacle lens or a camera lens.

Patent Literature 1 describes a polymerizable composition including an isocyanate compound having a specific cyclic structure (A), an aliphatic isocyanate compound having 4 to 11 carbon atoms (B), and a thiol compound (C). Patent Literature 1 also discloses that when the polymerizable composition is used, a molded product having excellent impact resistance, offering an excellent balance of optical characteristics such as a refractive index and Abbe number, handling, transparency, and heat resistance, and having excellent alkali resistance can be provided. The molded product provided has excellent impact resistance even when a primer layer is not present between a substrate layer and a hard coat layer or an antireflection coat layer.

### Citation List

### Patent Literature

Patent Literature 1: WO 2016/021680 A

### Summary

### Technical Problem

When an optical component is produced as shown in Patent Literature 1, a polymerizable composition containing a polythiol component and a polyisocyanate component is injected into a molding die for polymerization, and then polymerized to produce the optical component. When a large number of optical components are produced, bubbles are sometimes observed in the products.

An embodiment of the present disclosure relates to a method for producing an optical component resin that reduces bubble formation rate and also increases tensile strength.

### Solution to Problem

The present inventors have analyzed all possibilities throughout the process for producing the optical component, and have found that by using a method including a first pressure-reduction step and a second pressure-reduction step as described below to produce an optical component resin, bubble formation rate can be reduced, and also tensile strength can be increased.

An embodiment of the present disclosure relates to a method for producing an optical component resin including
a first pressure-reduction step in which a mixture containing a polyisocyanate component and a polythiol component is disposed under a reduced pressure,
a second pressure-reduction step in which a release agent is added after the first pressure-reduction step, and the mixture is further disposed under a reduced pressure, and
a polymerization step in which the mixture is polymerized.

### Advantageous Effects

An embodiment of the present disclosure provides a method for producing an optical component resin that reduces bubble formation rate and also increases tensile strength.

### Description of Embodiments

### [Method for producing optical component resin]

A method for producing an optical component resin according to an embodiment of the present disclosure includes
a first pressure-reduction step in which a mixture containing a polyisocyanate component and a polythiol component is disposed under a reduced pressure (hereinafter, also simply referred to as "first pressure-reduction step"),
a second pressure-reduction step in which a release agent is added after the first pressure-reduction step, and the mixture is further disposed under a reduced pressure (hereinafter, also simply referred to as "second pressure-reduction step"), and
a polymerization step in which the mixture is polymerized (hereinafter, also simply referred to as "polymerization step").

With the above configuration, a method for producing an optical component resin that can reduce bubble formation rate and also increase tensile strength can be provided.

The reason why such an effect is produced is not certain, but it is supposed to be as follows.

It is thought that when the steps of the first pressure-reduction step and the second pressure-reduction step are separated, the degassing efficiency during preparation can be improved, and the moisture in the mixture can be effectively removed. Further, it is thought that, as a result of the above, production of a urea compound, which is produced by a reaction between water and a polyisocyanate component, can be reduced, and a resin having a high crosslink density can be produced, which results in the increased tensile strength.

The method for producing an optical component according to an embodiment of the present disclosure is described in more detail below.

A method for producing an optical component according to an embodiment of the present disclosure, for example, includes
a step of mixing a polyisocyanate component and a polythiol component, and optionally an additive except for a release agent as necessary, to obtain a polymerizable composition (hereinafter, also referred to as "mixing step"),
a first pressure-reduction step in which a mixture containing the polymerizable composition is disposed under a reduced pressure,
a second pressure-reduction step in which a release agent is added after the first pressure-reduction step, and the mixture is disposed under a reduced pressure,
a step of injecting the mixture into a molding die (hereinafter, also referred to as "injection step"), and
a step of polymerizing the mixture (hereinafter, also referred to as "polymerization step").

### <Mixing step>

In the mixing step, for example, a polyisocyanate component and a polythiol component, and optionally an additive as necessary, are mixed to obtain a polymerizable composition. The order of the mixing is not particularly limited.

### [Polymerizable composition]

The polymerizable composition contains a polyisocyanate component and a polythiol component.

### (Polyisocyanate component)

Examples of the polyisocyanate component include a polyisocyanate compound having an aromatic ring, an alicyclic polyisocyanate compound, and a linear or branched aliphatic polyisocyanate compound.

Examples of the polyisocyanate compound having an aromatic ring include diisocyanatobenzene, 2,4-diisocyanatotoluene, ethylphenylene diisocyanate, isopropylphenylene diisocyanate, dimethylphenylene diisocyanate, diethylphenylene diisocyanate, diisopropylphenylene diisocyanate, trimethylbenzene triisocyanate, benzene triisocyanate, biphenyl diisocyanate, toluidine diisocyanate, 4,4'-methylenebis(phenyl isocyanate), 4,4'-methylenebis(2-methylphenyl isocyanate), bibenzyl-4,4'-diisocyanate, bis(isocyanatophenyl)ethylene, 1,3-bis(isocyanatomethyl)benzene, 1,4-bis(isocyanatomethyl)benzene, 1,3-bis(isocyanatoethyl)benzene, bis(isocyanatopropyl)benzene, α,α,α',α'-tetramethylxylylene diisocyanate, bis(isocyanatobutyl)benzene, bis(isocyanatomethyl)naphthalene, bis(isocyanatomethylphenyl) ether, 2-isocyanatophenyl-4-isocyanatophenyl sulfide, bis(4-isocyanatophenyl) sulfide, bis(4-isocyanatomethylphenyl) sulfide, bis(4-isocyanatophenyl) disulfide, bis(2-methyl-5-isocyanatophenyl) disulfide, bis(3-methyl-5-isocyanatophenyl) disulfide, bis(3-methyl-6-isocyanatophenyl) disulfide, bis(4-methyl-5-isocyanatophenyl) disulfide, bis(3-methyloxy-4-isocyanatophenyl) disulfide, and bis(4-methyloxy-3-isocyanatophenyl) disulfide.

Examples of the alicyclic polyisocyanate compound include 1,3-diisocyanatocyclohexane, isophorone diisocyanate, 1,3-bis(isocyanatomethyl)cyclohexane, 1,4-bis(isocyanatomethyl)cyclohexane, dicyclohexylmethane-4,4'-diisocyanate, 2,5-bis(isocyanatomethyl)-bicyclo[2,2,1]heptane, 2,6-bis(isocyanatomethyl)-bicyclo[2,2,1]heptane, 2,5-diisocyanato-1,4-dithiane, 2,5-bis(isocyanatomethyl)-1,4-dithiane, 4,5-diisocyanato-1,3-dithiolane, 4,5-bis(isocyanatomethyl)-1,3-dithiolane, and 4,5-bis (isocyanatomethyl)-2-methyl-1, 3-dithiolane.

Examples of the linear or branched aliphatic polyisocyanate compound include hexamethylene diisocyanate, 2,2-dimethylpentane diisocyanate, 2,2,4-trimethylhexane diisocyanate, butene diisocyanate, 1,3-butadiene-1,4-diisocyanate, 2,4,4-trimethylhexamethylene diisocyanate, 1,6,11-undecane triisocyanate, 1,3,6-hexamethylene triisocyanate, 1,8-diisocyanato-4-isocyanatomethyloctane, bis(isocyanatoethyl) carbonate, bis(isocyanatoethyl) ether, lysine diisocyanatomethyl ester, lysine triisocyanate, bis(isocyanatomethyl) sulfide, bis(isocyanatoethyl) sulfide, bis(isocyanatopropyl) sulfide, bis(isocyanatohexyl) sulfide, bis(isocyanatomethyl) sulfone, bis(isocyanatomethyl) disulfide, bis(isocyanatoethyl) disulfide, bis(isocyanatopropyl) disulfide, bis(isocyanatomethylthio)methane, bis(isocyanatoethylthio)methane, bis(isocyanatomethylthio)ethane, bis(isocyanatoethylthio)ethane, 1,5-diisocyanato-2-isocyanatomethyl-3-pentane, 1,2,3-tris(isocyanatomethylthio)propane, 1,2,3-tris (isocyanatoethylthio)propane, 3,5-dithia-1,2,6,7-heptane tetraisocyanate, 2,6-diisocyanatomethyl-3,5-dithia-1,7-heptane diisocyanate, 2,5-diisocyanatomethylthiophene, 4-isocyanatoethylthio-2,6-dithia-1,8-octane diisocyanate, 1,2-diisothiocyanatoethane, and 1,6-diisothiocyanatohexane.

These compounds may be used alone or in combination of two or more.

The polyisocyanate component contains
preferably at least one selected from the group consisting of 2,5-bis(isocyanatomethyl)-bicyclo[2.2.1]heptane, 2,6-bis(isocyanatomethyl)-bicyclo[2.2.1]heptane, 1,3-bis(isocyanatomethyl)cyclohexane, 1,4-bis(isocyanatomethyl)cyclohexane, 1,3-bis(isocyanatomethyl)benzene, 1,4-bis(isocyanatomethyl)benzene, dicyclohexylmethane-4,4'-diisocyanate, isophorone diisocyanate, and hexamethylene diisocyanate,
more preferably at least one selected from the group consisting of 1,3-bis(isocyanatomethyl)benzene, hexamethylene diisocyanate, and 1,3-bis(isocyanatomethyl)cyclohexane, and
still more preferably 1,3-bis(isocyanatomethyl)benzene. The polyisocyanate component contains the above-described preferred polyisocyanate component in an amount of preferably 50% by mass or more, more preferably 70% by mass or more, still more preferably 90% by mass or more, and even more preferably 95% by mass or more, and 100% by mass or less.

### (Polythiol component)

Examples of the polythiol component include an ester compound of a polyol compound and a mercapto group-containing carboxylic acid compound, a linear or branched aliphatic polythiol compound, a polythiol compound having an alicyclic structure, and an aromatic polythiol compound.

In the ester compound of a polyol compound and a mercapto group-containing carboxylic acid compound, examples of the polyol compound include a compound having two or more hydroxy groups in the molecule.

Examples of the polyol compound include ethylene glycol, diethylene glycol, propanediol, propanetriol, butanediol, trimethylolpropane, bis(2-hydroxyethyl) disulfide, pentaerythritol, and dipentaerythritol.

Examples of the mercapto group-containing carboxylic acid compound include thioglycolic acid, mercaptopropionic acid, a thiolactic acid compound, and thiosalicylic acid.

Examples of the ester compound of a polyol compound and a mercapto group-containing carboxylic acid compound include ethylene glycol bis(2-mercaptoacetate), ethylene glycol bis(3-mercaptopropionate), diethylene glycol bis(2-mercaptoacetate), diethylene glycol bis(3-mercaptopropionate), 1,4-butanediol bis(2-mercaptoacetate), 1,4-butanediol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tetrakis(2-mercaptopropionate), pentaerythritol tetrakis(3-mercaptopropionate), dipentaerythritol hexakis(2-mercaptoacetate), and dipentaerythritol hexakis(3-mercaptopropionate).

Examples of the linear or branched aliphatic polythiol compound include 1,2-ethanedithiol, 1,1-propanedithiol, 1,2-propanedithiol, 1,3-propanedithiol, 2,2-propanedithiol, 1,6-hexanedithiol, 1,2,3-propanetrithiol, 2,2-dimethylpropane-1,3-dithiol, 3,4-dimethyloxybutane-1,2-dithiol, 2,3-dimercapto-1-propanol, 1,2-dimercaptopropyl methyl ether, 2,3-dimercaptopropyl methyl ether, 2-(2-mercaptoethylthio)propane-1,3-dithiol, 2,2-bis(mercaptomethyl)-1,3-propanedithiol, bis(mercaptomethylthio)methane, tris(mercaptomethylthio)methane, bis(2-mercaptoethylthio)methane, 1,2-bis(mercaptomethylthio)ethane, 1,2-bis(2-mercaptoethylthio)ethane, 1,3-bis(mercaptomethylthio)propane, 1,3-bis(2-mercaptoethylthio)propane, 1,1,2,2-tetrakis(mercaptoethylthio)ethane, 1,1,3,3-tetrakis(mercaptoethylthio)propane, 3-mercaptomethyl-1,5-dimercapto-2,4-dithiapentane, tetrakis(mercaptoethylthio)propane, bis(2-mercaptoethyl) ether, bis(2-mercaptoethyl) sulfide, bis(2-mercaptoethyl) disulfide, bis(2-mercaptoethylthio)-3-mercaptopropane, 4-mercaptomethyl-1,8-dimercapto-3,6-dithiaoctane, 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.

Examples of the polythiol compound having an alicyclic structure include 1,1-cyclohexanedithiol, 1,2-cyclohexanedithiol, methylcyclohexanedithiol, bis(mercaptomethyl)cyclohexane, 2-(2,2-bis(mercaptomethylthio)ethyl)-1,3-dithietane, 2,5-bis(mercaptomethyl)-1,4-dithiane, and 4,8-bis(mercaptomethyl)-1,3-dithiane.

Examples of the aromatic polythiol compound include 1,3-dimercaptobenzene, 1,4-dimercaptobenzene, 1,3-bis(mercaptomethyl)benzene, 1,4-bis(mercaptomethyl)benzene, 1,3-bis(mercaptoethyl)benzene, 1,4-bis(mercaptoethyl)benzene, 1,3,5-trimercaptobenzene, 1,3,5-tris(mercaptomethyl)benzene, 1,3,5-tris(mercaptoethyl)benzene, 4,4'-dimercaptobiphenyl, 4,4'-dimercaptobibenzyl, 2,5-toluenedithiol, 1,5-naphthalenedithiol, 2,6-naphthalenedithiol, 2,7-naphthalenedithiol, 2,4-dimethylbenzene-1,3-dithiol, 4,5-dimethylbenzene-1,3-dithiol, 9,10-anthracenedimethanethiol, 1,3-di(p-methyloxyphenyl)propane-2,2-dithiol, 1,3-diphenylpropane-2,2-dithiol, phenylmethane-1,1-dithiol, and 2, 4-di(p-mercaptophenyl)pentane.

These compounds may be used alone or in combination of two or more.

The polythiol component is
preferably at least one selected from the group consisting of 2,5-bis(mercaptomethyl)-1,4-dithiane, pentaerythritol tetrakis(2-mercaptoacetate), pentaerythritol tetrakis(3-mercaptopropionate), 4-mercaptomethyl-1,8-dimercapto-3,6-dithiaoctane, 4,7-bis(mercaptomethyl)-3,6, 9-trithiaundecane-1,11-dithiol, 4,8-bis(mercaptomethyl)-3,6,9-trithiaundecane-1,11-dithiol, 5,7-bis(mercaptomethyl)-3,6, 9-trithiaundecane-1,11-dithiol, trimethylolpropane tris(2-mercaptoacetate), trimethylolpropane tris(3-mercaptopropionate), butanediol bis(2-mercaptoacetate), butanediol bis(3-mercaptopropionate), dipentaerythritol hexakis(2-mercaptoacetate), and dipentaerythritol hexakis(3-mercaptopropionate),
more preferably at least one selected from the group consisting of 4,7-bis(mercaptomethyl)-3,6,9-trithiaundecane-1,11-dithiol, 4,8-bis(mercaptomethyl)-3,6,9-trithiaundecane-1,11-dithiol, 5,7-bis(mercaptomethyl)-3,6,9-trithiaundecane-1,11-dithiol, 4-mercaptomethyl-1,8-dimercapto-3,6-dithiaoctane, pentaerythritol tetrakis(3-mercaptopropionate), 2,5-bis(mercaptomethyl)-1,4-dithiane, and pentaerythritol tetrakis(2-mercaptoacetate),
still more preferably at least one selected from the group consisting of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol, and
even more preferably a mixture of 4,7-bis(mercaptomethyl)-3,6, 9-trithiaundecane-1,11-dithiol, 4,8-bis(mercaptomethyl)-3,6, 9-trithiaundecane-1,11-dithiol, and 5,7-bis(mercaptomethyl)-3,6,9-trithiaundecane-1,11-dithiol.

The polythiol component contains the above-described preferred polythiol component in an amount of preferably 50% by mass or more, more preferably 70% by mass or more, still more preferably 90% by mass or more, and even more preferably 95% by mass or more, and 100% by mass or less.

The equivalent ratio between mercapto groups of the polythiol component and isocyanato groups of the polyisocyanate component (mercapto group/isocyanato group) is preferably 40/60 or more, more preferably 43/57 or more, and still more preferably 45/55 or more, and preferably 60/40 or less, more preferably 55/45 or less, and still more preferably 53/47 or less.

The total amount of the polythiol component and the polyisocyanate component contained in the polymerizable composition is preferably 80% by mass or more, more preferably 90% by mass or more, and still more preferably 95% by mass or more, and 100% by mass or less.

Examples of a preferred combination of the polyisocyanate component and the polythiol component in the polymerizable composition include:
(i) 1,3-bis(isocyanatomethyl)benzene, and a mixture of 4,7-bis(mercaptomethyl)-3,6,9-trithiaundecane-1,11-dithiol, 4,8-bis(mercaptomethyl)-3,6, 9-trithiaundecane-1,11-dithiol, and 5,7-bis(mercaptomethyl)-3,6,9-trithiaundecane-1,11-dithiol,
(ii) a mixture of 2,5-bis(isocyanatomethyl)-bicyclo[2.2.1]heptane and 2,6-bis(isocyanatomethyl)-bicyclo[2.2.1]heptane, and 4-mercaptomethyl-1,8-dimercapto-3,6-dithiaoctane and pentaerythritol tetrakis(3-mercaptopropionate), and
(iii) 1,3-bis(isocyanatomethyl)cyclohexane, and 2,5-bis(mercaptomethyl)-1,4-dithiane and pentaerythritol tetrakis(2-mercaptoacetate) .

### (Additive)

Examples of the additive include a polymerization catalyst, an ultraviolet absorber, an antioxidant, a coloring inhibitor, and a fluorescent whitening agent. These additives may be used alone or in combination of two or more. It is preferred that no release agent is added in this step. That is, the additives added in this step preferably do not include a release agent.

The additive preferably contains at least one selected from the group consisting of a polymerization catalyst and an ultraviolet absorber.

By mixing the above-described components by a usual method, a polymerizable composition can be obtained.

### (Polymerization catalyst)

Examples of the polymerization catalyst include a tin compound and a nitrogen-containing compound.

Examples of the tin compound include an alkyl tin compound and an alkyl tin halide compound.

Examples of the alkyl tin compound include dibutyl tin diacetate and dibutyl tin dilaurate.

Examples of the alkyl tin halide compound include dibutyl tin dichloride, dimethyl tin dichloride, monomethyl tin trichloride, trimethyl tin chloride, tributyl tin chloride, tributyl tin fluoride, and dimethyl tin dibromide.

Among these compounds, dibutyl tin diacetate, dibutyl tin dilaurate, dibutyl tin dichloride, and dimethyl tin dichloride are preferred, and dimethyl tin dichloride is more preferred.

Examples of the nitrogen-containing compound include a tertiary amine, a quaternary ammonium salt, an imidazole-based compound, and a pyrazole-based compound. The tertiary amine is preferably a hindered amine.

Examples of the tertiary amine include triethylamine, tri-n-propylamine, triisopropylamine, tri-n-butylamine, triisobutylamine, N,N-dimethylbenzylamine, N-methylmorpholine, N,N-dimethylcyclohexylamine, pentamethyldiethylenetriamine, bis(2-dimethylaminoethyl) ether, N-methylmorpholine, N,N'-dimethylpiperazine, N,N,N',N'-tetramethylethylenediamine, and 1,4-diazabicyclo[2.2.2]octane (DABCO).

Examples of the hindered amine include 1,2,2,6,6-pentamethyl-4-piperidinol, 1,2,2,6,6-pentamethyl-4-hydroxyethyl-4-piperidinol, methyl-1,2,2,6,6-pentamethyl-4-piperidyl sebacate, a mixture of methyl-1,2,2,6,6-pentamethyl-4-piperidyl sebacate and bis(1,2,2,6,6-pentamethyl-4-piperidyl) sebacate, bis(1,2,2,6,6-pentamethyl-4-piperidyl) sebacate, bis(2,2,6,6-tetramethyl-1-(octyloxy)-4-piperidyl) sebacate, bis(1,2,2,6,6-pentamethyl-4-piperidyl) [[3,5-bis(1,1-dimethylethyl)-4-hydroxyphenyl]methyl]butyl malonate, and tetrakis(1,2,2,6,6-pentamethyl-4-piperidyl)butane-1,2,3,4-tetracarboxylate.

Examples of the quaternary ammonium salt include tetraethylammonium hydroxide.

Examples of the imidazole-based compound include imidazole, 1,2-dimethylimidazole, benzylmethylimidazole, and 2-ethyl-4-imidazole.

Examples of the pyrazole-based compound include pyrazole and 3,5-dimethylpyrazole.

Among these compounds, the tertiary amine such as a hindered amine, the imidazole-based compound, and the pyrazole-based compound are preferred, and the hindered amine is more preferred.

The polymerization catalyst is added preferably in an amount of 0.001 parts by mass or more, more preferably 0.005 parts by mass or more, and still more preferably 0.007 parts by mass or more, and preferably 2 parts by mass or less, more preferably 1 part by mass or less, and still more preferably 0.5 parts by mass or less with respect to 100 parts by mass of the total amount of the polyisocyanate component and the polythiol component.

### (Ultraviolet absorber)

Examples of the ultraviolet absorber include a benzotriazole-based compound, a benzophenone-based compound, dibenzoylmethane, and a dibenzoylmethane-based compound. Among these compounds, the benzotriazole-based compound or the benzophenone-based compound is preferred.

Examples of the benzotriazole-based compound include 2-(2-hydroxy-5-methylphenyl)-2H-benzotriazole, 2-(2-hydroxy-3,5-di-tert-butylphenyl)-5-chloro-2H-benzotriazole, 2-(3-tert-butyl-2-hydroxy-5-methylphenyl)-5-chloro-2H-benzotriazole, 2-(2-hydroxy-3,5-di-tert-amylphenyl)-2H-benzotriazole, 2-(2-hydroxy-3,5-di-tert-butylphenyl)-2H-benzotriazole, 2-(2-hydroxy-5-tert-butylphenyl)-2H-benzotriazole, 2-(2-hydroxy-5-octylphenyl)-2H-benzotriazole, 2-(2-hydroxy-4-ethyloxyphenyl)-2H-benzotriazole, 2-(2-hydroxy-4-propyloxyphenyl)-2H-benzotriazole, 2-(2-hydroxy-4-octyloxyphenyl)-2H-benzotriazole, and 2-(2-hydroxy-4-octyloxyphenyl)-5-chloro-2H-benzotriazole.

Examples of the benzophenone-based compound include 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, and 2,2'-dihydroxy-4-methoxybenzophenone.

Examples of the dibenzoylmethane-based compound include 4-tert-butyl-4'-methoxydibenzoylmethane.

These compounds may be used alone or in combination of two or more.

The ultraviolet absorber is added preferably in an amount of 0.01 parts by mass or more, more preferably 0.10 parts by mass or more, still more preferably 0.30 parts by mass or more, and even more preferably 0.40 parts by mass or more, and preferably 5 parts by mass or less, more preferably 3 parts by mass or less, and still more preferably 2 parts by mass or less with respect to 100 parts by mass of the total amount of the polyisocyanate component and the polythiol component.

### <First pressure-reduction step>

In the first pressure-reduction step, a mixture containing a polyisocyanate component and a polythiol component is disposed under a reduced pressure.

The degree of achieved vacuum in the first pressure-reduction step is, from the standpoint of further reducing the bubble formation rate and also further increasing the tensile strength, preferably 1,000 Pa or less, more preferably 800 Pa or less, and still more preferably 700 Pa or less.

On the other hand, the degree of achieved vacuum in the first pressure-reduction step is, from the standpoint of working efficiency, preferably 10 Pa or more, more preferably 50 Pa or more, still more preferably 100 Pa or more, and even more preferably 300 Pa or more.

The period of time for which the mixture is disposed under a reduced pressure is preferably 10 minutes or more and 90 minutes or less, more preferably 20 minutes or more and 70 minutes or less, and still more preferably 25 minutes or more and 50 minutes or less.

In the first pressure-reduction step, the amount of the release agent contained in the mixture is, from the standpoint of further reducing the bubble formation rate and also further increasing the tensile strength, preferably less than 0.01% by mass, more preferably 0% by mass or more and less than 0.01% by mass, and still more preferably 0% by mass or more and less than 0.001% by mass.

### <Second pressure-reduction step>

In the second pressure-reduction step, a release agent is added after the first pressure-reduction step, and the mixture is further disposed under a reduced pressure.

### (Release agent)

Examples of the release agent include an acidic phosphate such as an acidic alkyl phosphate. The number of carbon atoms in an alkyl group of the acidic alkyl phosphate is preferably 1 or more and more preferably 4 or more, and preferably 20 or less and more preferably 12 or less.

The acidic phosphate may be either a phosphoric monoester or a phosphoric diester. A mixture of a phosphoric monoester and a phosphoric diester is preferred.

Examples of the acidic alkyl phosphate include isopropyl acid phosphate, butyl acid phosphate, octyl acid phosphate, nonyl acid phosphate, decyl acid phosphate, isodecyl acid phosphate, tridecyl acid phosphate, stearyl acid phosphate, propylphenyl acid phosphate, butylphenyl acid phosphate, and butoxyethyl acid phosphate.

The release agent is added preferably in an amount of 0.01 parts by mass or more, more preferably 0.05 parts by mass or more, and still more preferably 0.08 parts by mass or more, and preferably 5 parts by mass or less, more preferably 1 part by mass or less, still more preferably 0.5 parts by mass or less, and even more preferably 0.30 parts by mass or less with respect to 100 parts by mass of the total amount of the polyisocyanate component and the polythiol component.

The degree of achieved vacuum in the second pressure-reduction step is, from the standpoint of further reducing the bubble formation rate and also further increasing the tensile strength, preferably 1,000 Pa or less, more preferably 800 Pa or less, still more preferably 700 Pa or less, even more preferably 600 Pa or less, further more preferably 500 Pa or less, and still further more preferably 400 Pa or less.

On the other hand, the degree of achieved vacuum in the second pressure-reduction step is, form the standpoint of working efficiency, preferably 10 Pa or more, more preferably 50 Pa or more, still more 100 Pa or more, and even more preferably 150 Pa or more.

The period of time for which the mixture is disposed under a reduced pressure is preferably 10 minutes or more and 120 minutes or less, more preferably 30 minutes or more and 110 minutes or less, and still more preferably 60 minutes or more and 100 minutes or less.

### <Injection step>

In the injection step, for example, the obtained mixture is injected into a molding die.

When a spectacle lens is produced as an optical component, for example, a molding die including a pair of molds that form both of two main surfaces of the spectacle lens substrate, and a tape or a gasket for fixing these molds with a gap is used. The above-described mold may be formed of glass or metal.

Prior to injection into a molding die, the polymerizable composition may be filtrated. The filtration method is not particularly limited. For example, the polymerizable composition may be filtrated using a filter having a pore size of 1 to 30 µm.

### <Polymerization step>

In the polymerization step, for example, the mixture is polymerized by heating.

Polymerization conditions can be appropriately set depending on the mixture and the shape of an optical component to be formed.

The polymerization initiation temperature is usually 0 to 50°C, and preferably 5 to 30°C. It is preferred that the temperature is raised from the polymerization initiation temperature, and then heating is preferably performed to perform curing formation. For example, the maximum temperature after the temperature being raised is 110 to 130°C. Polymerization time, which is time from initiation of polymerization until completion of the polymerization, is, for example, 3 to 96 hours.

After completion of the polymerization, the optical component may be released from a die and may be annealed. The temperature of the annealing treatment is preferably 100 to 150°C.

By the above-described method, an optical component resin is obtained.

### [Optical component]

Examples of the optical component include a spectacle lens, a camera lens, a prism, an optical fiber, a recording medium substrate used for an optical disc or a magnetic disk, and an optical filter attached to a display of a computer. Among these, the spectacle lens is preferred.

The spectacle lens preferably includes a lens substrate formed of the above-described optical component (hereinafter, also referred to as "spectacle lens substrate").

The surface shape of the spectacle lens substrate is not particularly limited, and may be any of a flat surface, a convex surface, a concave surface, or the like.

The spectacle lens substrate may be any of a single focus lens, a multifocal lens, a progressive addition lens, or the like. For example, in an exemplary progressive addition lens, usually, a near portion area (near portion) and a corridor area (intermediate area) are included in a lower area, and a distance portion area (distance portion) is included in an upper area.

The spectacle lens substrate may be a finish type spectacle lens substrate or a semi finish type spectacle lens substrate.

The thickness of the geometrical center and the diameter of the spectacle lens substrate are not particularly limited. However, the thickness of the geometrical center is usually about 0.8 to 30 mm, and the diameter is usually about 50 to 100 mm.

The refractive index (nₑ) of the spectacle lens substrate is, for example, 1.53 or more, 1.55 or more, 1.58 or more, and 1.60 or more, and, for example, 1.75 or less and 1.70 or less.

The spectacle lens preferably includes a spectacle lens substrate and a functional layer on a surface of the spectacle lens substrate.

Examples of the functional layer include at least one selected from the group consisting of a hard coat layer, a primer layer, an antireflection film, and a water repellent film.

The hard coat layer is disposed for improving scratch resistance, and preferably can be formed by applying a coating solution containing a fine particulate inorganic material such as an organic silicon compound, tin oxide, silicon oxide, zirconium oxide, or titanium oxide.

The primer layer is disposed for improving impact resistance, and contains, for example, polyurethane as a main component. Here, the content of polyurethane in the primer layer is preferably 50% by mass or more.

Examples of the antireflection film include a layered film of inorganic substances such as silicon oxide, titanium dioxide, zirconium oxide, and tantalum oxide.

The water repellent film can be formed using an organic silicon compound containing a fluorine atom.

### [Spectacles]

Spectacles according to an embodiment of the present disclosure include a spectacle lens and a frame in which the spectacle lens is mounted.

The frame includes, for example, a pair of rims, a bridge disposed between the rims, and a pair of temples each disposed at one end of each of the rims.

The rims may be half rims.

The frame may be a so-called rimless frame. In this case, the spectacles include, for example, a pair of spectacle lenses, a bridge disposed between the spectacle lenses, and a pair of temples each disposed at one end of each of the spectacle lenses.

### Examples

Hereinafter, embodiments of the present disclosure will be described using specific examples, but claims of the present invention are not limited by the following examples. Operations and evaluations described below are performed in the atmosphere at room temperature (ca. 20 to 25°C), unless otherwise indicated. The expressions "%" and "part" in the following examples refer to "% by mass" and "part by mass", respectively, unless otherwise indicated.

### [Evaluating method]

### <Measurement of tensile strength>

In a tensile strength test, using a flat shaped resin material having a diameter of 53 mm and a center thickness of 1.8 mm, one hole having a diameter of 1.6 mm was made at a 4-mm distance from the periphery, and another hole having a diameter of 1.6 mm was similarly made at a diametrically opposed portion. A metal rod having a diameter of 1 mm was thrust into one of the holes, and another rod was thrust into the other hole. Then, tensile strength was measured using a universal material testing instrument "RTC-1225" (manufactured by ORIENTEC CORPORATION) at a testing speed of 5 mm/min. The test was performed on 10 test pieces per material produced under each of the following conditions. The average value of the maximum point loads (kgf) was regarded as tensile strength of the material.

### <Bubble>

In a black box, an area of a spectacle lens substrate around the geometrical center within a diameter of 30 mm was visually observed under illumination with fluorescent lamps. If a bubble was observed, the substrate failed this test. The spectacle lens substrates produced under the following conditions were inspected. Proportions of the failed substrates are shown in Table 1.

### [Production of spectacle lens substrate]

### Example 1

A solution was prepared by mixing and dissolving 50.6 parts by mass of 1,3-bis(isocyanatomethyl)benzene, 0.01 parts by mass of dimethyl tin dichloride as a polymerization catalyst, and 0.50 parts by mass of an ultraviolet absorber "SEESORB 701" (manufactured by SHIPRO KASEI KAISHA, LTD.). To the solution, 49.4 parts by mass of a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol was added and mixed.

The mixed solution was degassed at 600 Pa for 30 minutes (first pressure-reduction step). Then, 0.10 parts by mass of a release agent "JP-506h" (manufactured by Johoku Chemical Co., Ltd., butoxyethyl acid phosphate) was added and degassed at 600 Pa for 45 minutes (second pressure-reduction step), and the resulting solution was filtrated using a PP (polypropylene) filter having a pore size of 5.0 µm. Thereafter, the mixed solution was injected into a molding die constituted by a glass mold having a -4.00 D lens shape and a diameter of 75 mm, and a gasket. Also, for forming a flat substrate for the tensile strength test, the mixed solution was injected into a molding die having a diameter of 75 mm constituted by a flat-shaped glass mold and a gasket.

The polymerizable composition-injected molding die was introduced into a polymerization furnace, and heated from 15°C to 120°C for 24 hours to polymerize the polymerizable composition. After completion of the polymerization, the molding die was recovered from the polymerization furnace, and the polymerized product was released from the molding die to obtain a spectacle lens substrate. The resulting spectacle lens substrate was then annealed using an annealing furnace at an internal temperature of 120°C for 3 hours.

Under the same condition, a total of 500 pieces of spectacle lens substrates were produced. The resulting lens substrates for spectacle lenses were evaluated for bubble formation rate. Further, using the resulting flat substrates for the tensile strength test, tensile strength was evaluated. It should be noted that a bubble was not observed in the flat substrates for the tensile strength test by visual inspection.

### Examples 2 to 5

A total of 500 pieces of spectacle lens substrates and flat substrates for the tensile strength test were formed as in Example 1, except that the conditions of the second pressure-reduction step after the addition of the release agent were changed as shown in Table 1, and evaluated for bubble formation rate and tensile strength. It should be noted that a bubble was not observed in the flat substrates for the tensile strength test by visual inspection.

### Examples 6 to 15

In each of Examples 6 to 15, a total of 500 pieces of spectacle lens substrates and flat substrates for the tensile strength test were formed as in Example 1, except that the polyisocyanate component and the polythiol component used in Example 1 were changed as shown in Table 1, and the degrees of achieved vacuum and the periods of time in the conditions of the first pressure-reduction step and the second pressure-reduction step were changed as shown in Table 1, and evaluated for bubble formation rate and tensile strength. It should be noted that a bubble was not observed in the flat substrates for the tensile strength test by visual inspection.

### Comparative Example 1

A solution was prepared by mixing and dissolving 50.6 parts by mass of 1,3-bis(isocyanatomethyl)benzene, 0.01 parts by mass of dimethyl tin dichloride as a polymerization catalyst, 0.50 parts by mass of an ultraviolet absorber "SEESORB 701" (manufactured by SHIPRO KASEI KAISHA, LTD.), and 0.10 parts by mass of a release agent "JP-506H" (manufactured by Johoku Chemical Co., Ltd., butoxyethyl acid phosphate). To the solution, 49.4 parts by mass of a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol was added and mixed.

The mixed solution was degassed at 200 Pa for 45 minutes, and thereafter filtrated using a PP (polypropylene) filter having a pore size of 5.0 µm. Thereafter, the mixed solution was injected into a molding die constituted by a glass mold having a -4.00 D lens shape and a diameter of 75 mm, and a gasket. Also, for forming a flat substrate for the tensile strength test, the mixed solution was injected into a molding die having a diameter of 75 mm constituted by a flat-shaped glass mold and a gasket.

The polymerizable composition-injected molding die was introduced into a polymerization furnace, and heated from 15°C to 120°C for 24 hours to polymerize the polymerizable composition. After completion of the polymerization, the molding die was recovered from the polymerization furnace, and the polymerized product was released from the molding die to obtain a spectacle lens substrate. The resulting spectacle lens substrate was then annealed using an annealing furnace at an internal temperature of 120°C for 3 hours.

Under the same condition, a total of 500 pieces of spectacle lens substrates were produced. The resulting lens substrates for spectacle lenses were evaluated for bubble formation rate. Further, using the resulting flat substrates for the tensile strength test, tensile strength was evaluated. It should be noted that a bubble was not observed in the flat substrates for the tensile strength test by visual inspection.

### Comparative Examples 2 and 3

A total of 500 pieces of spectacle lens substrates and flat substrates for the tensile strength test were formed as in Comparative Example 1, except that the conditions for degassing the mixed solution were changed as shown in Table 1, and evaluated for bubble formation rate and tensile strength. It should be noted that a bubble was not observed in the flat substrates for the tensile strength test by visual inspection.

### Comparative Examples 4 to 9

In each of Comparative Examples 4 to 9, a total of 500 pieces of spectacle lens substrates and flat substrates for the tensile strength test were formed as in Comparative Example 1, except that the polyisocyanate component and the polythiol component used in Comparative Example 1 were changed as shown in Table 1, and the degrees of achieved vacuum and the periods of time in the conditions for degassing the mixed solution were changed as shown in Table 1, and evaluated for bubble formation rate and tensile strength. It should be noted that a bubble was not observed in the flat substrates for the tensile strength test by visual inspection.

### [Table 1]

**Table 1**

| | Polymerizable composition | | | | First pressure-reduction step | | Second pressure-reduction step | | Evaluation | |
|---|---|---|---|---|---|---|---|---|---|---|
| | Polyisocyanate component | | Polythiol component | | Degree of achieved vacuum (Pa) | Period of time (min) | Degree of achieved vacuum (Pa) | Period of time (min) | Bubble formation rate (%) | Tensile strength (kgf) |
| | Type | Parts by mass | Type | Parts by mass | | | | | | |
| Example 1 | I-1 | 50.6 | T-4 | 49.4 | 600 | 30 | 600 | 45 | 0.6 | 80 |
| Example 2 | I-1 | 50.6 | T-4 | 49.4 | 600 | 30 | 200 | 60 | 0.4 | 82 |
| Example 3 | I-1 | 50.6 | T-4 | 49.4 | 600 | 30 | 200 | 90 | 0.2 | 85 |
| Example 4 | I-1 | 50.6 | T-4 | 49.4 | 600 | 30 | 100 | 45 | 0.2 | 78 |
| Example 5 | I-1 | 50.6 | T-4 | 49.4 | 600 | 30 | 100 | 60 | 0.2 | 77 |
| Example 6 | I-2 | 50.6 | T-3/T-5 | 25.5/23.9 | 600 | 30 | 600 | 45 | 0.6 | 84 |
| Example 7 | I-2 | 50.6 | T-3/T-5 | 25.5/23.9 | 600 | 30 | 200 | 60 | 0.8 | 79 |
| Example 8 | I-2 | 50.6 | T-3/T-5 | 25.5/23.9 | 600 | 30 | 200 | 90 | 0.6 | 82 |
| Example 9 | I-2 | 50.6 | T-3/T-5 | 25.5/23.9 | 600 | 30 | 100 | 45 | 0.2 | 80 |
| Example 10 | I-2 | 50.6 | T-3/T-5 | 25.5/23.9 | 600 | 30 | 100 | 60 | 0.2 | 84 |
| Example 11 | I-3 | 47.5 | T-1/T-2 | 26.0/26.3 | 600 | 30 | 600 | 45 | 0.8 | 79 |
| Example 12 | I-3 | 47.5 | T-1/T-2 | 26.0/26.3 | 600 | 30 | 200 | 60 | 0.6 | 81 |
| Example 13 | I-3 | 47.5 | T-1/T-2 | 26.0/26.3 | 600 | 30 | 200 | 90 | 0.4 | 80 |
| Example 14 | I-3 | 47.5 | T-1/T-2 | 26.0/26.3 | 600 | 30 | 100 | 45 | 0.6 | 79 |
| Example 15 | I-3 | 47.5 | T-1/T-2 | 26.0/26.3 | 600 | 30 | 100 | 60 | 0.4 | 83 |
| Comparative Example 1 | I-1 | 50.6 | T-4 | 49.4 | - | - | 200 | 45 | 2.8 | 71 |
| Comparative Example 2 | I-1 | 50.6 | T-4 | 49.4 | - | - | 200 | 75 | 2.6 | 70 |
| Comparative Example 3 | I-1 | 50.6 | T-4 | 49.4 | - | - | 200 | 90 | 2.2 | 68 |
| Comparative Example 4 | I-2 | 50.6 | T-3/T-5 | 25.5/23.9 | - | - | 200 | 45 | 3.2 | 67 |
| Comparative Example 5 | I-2 | 50.6 | T-3/T-5 | 25.5/23.9 | - | - | 200 | 75 | 3.0 | 68 |
| Comparative Example 6 | I-2 | 50.6 | T-3/T-5 | 25.5/23.9 | - | - | 200 | 90 | 2.6 | 67 |
| Comparative Example 7 | I-3 | 47.5 | T-1/T2 | 26.0/26.3 | - | - | 200 | 45 | 3.8 | 65 |
| Comparative Example 8 | I-3 | 47.5 | T-1/T2 | 26.0/26.3 | - | - | 200 | 75 | 2.8 | 69 |
| Comparative Example 9 | I-3 | 47.5 | T-1/T2 | 26.0/26.3 | - | - | 200 | 90 | 2.4 | 63 |

Abbreviations in Table 1 are as described below.
I-1: 1,3-bis(isocyanatomethyl)benzene
I-2: A mixture of 2,5-bis(isocyanatomethyl)-bicyclo[2.2.1]heptane and 2,6-bis(isocyanatomethyl)-bicyclo[2.2.1]heptane
1-3: 1,3-bis(isocyanatomethyl)cyclohexane
T-1: 2,5-bis(mercaptomethyl)-1,4-dithiane
T-2: pentaerythritol tetrakis(2-mercaptoacetate)
T-3: 4-mercaptomethyl-1,8-dimercapto-3,6-dithiaoctane
T-4: A mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol
T-5: pentaerythritol tetrakis(3-mercaptopropionate)

As described above, it is understood from the results of Examples and Comparative Examples that the bubble formation is reduced, and also the tensile strength is increased by the methods of Examples.

## Claims

1. A method for producing an optical component resin comprising
a first pressure-reduction step in which a mixture containing a polyisocyanate component and a polythiol component is disposed under a reduced pressure,
a second pressure-reduction step in which a release agent is added after the first pressure-reduction step, and the mixture is further disposed under a reduced pressure, and
a polymerization step in which the mixture is polymerized.

2. The method for producing an optical component resin according to claim 1, wherein the degree of achieved vacuum in the first pressure-reduction step is 1,000 Pa or less.

3. The method for producing an optical component resin according to claim 1 or 2, wherein the degree of achieved vacuum in the second pressure-reduction step is 1,000 Pa or less.

4. The method for producing an optical component resin according to any of claims 1 to 3, wherein, in the first pressure-reduction step, the amount of the release agent contained in the mixture is less than 0.01% by mass.

5. The method for producing an optical component resin according to any of claims 1 to 4, wherein, in the second pressure-reduction step, the release agent is added in an amount of 0.01 parts by mass or more and 5 parts by mass or less with respect to 100 parts by mass of the total amount of the polyisocyanate component and the polythiol component.

6. The method for producing an optical component resin according to any of claims 1 to 5, wherein the release agent is an acidic phosphate.

7. The method for producing an optical component resin according to any of claims 1 to 6, wherein the polythiol component contains at least one selected from the group consisting of 2,5-bis(mercaptomethyl)-1,4-dithiane, pentaerythritol tetrakis(2-mercaptoacetate), pentaerythritol tetrakis(3-mercaptopropionate), 4-mercaptomethyl-1,8-dimercapto-3,6-dithiaoctane, 4,7-bis(mercaptomethyl)-3,6, 9-trithiaundecane-1,11-dithiol, 4,8-bis(mercaptomethyl)-3,6, 9-trithiaundecane-1,11-dithiol, 5,7-bis(mercaptomethyl)-3,6,9-trithiaundecane-1,11-dithiol, trimethylolpropane tris(2-mercaptoacetate), trimethylolpropane tris(3-mercaptopropionate), butanediol bis(2-mercaptoacetate), butanediol bis (3-mercaptopropionate), dipentaerythritol hexakis(2-mercaptoacetate), and dipentaerythritol hexakis(3-mercaptopropionate).

8. The method for producing an optical component resin according to any of claims 1 to 7, wherein the polyisocyanate component contains at least one selected from the group consisting of 2,5-bis(isocyanatomethyl)-bicyclo[2.2.1]heptane, 2,6-bis(isocyanatomethyl)-bicyclo[2.2.1]heptane, 1,3-bis(isocyanatomethyl)cyclohexane, 1,4-bis(isocyanatomethyl)cyclohexane, 1,3-bis(isocyanatomethyl)benzene, 1,4-bis(isocyanatomethyl)benzene, dicyclohexylmethane-4,4'-diisocyanate, isophorone diisocyanate, and hexamethylene diisocyanate.

9. The method for producing an optical component resin according to any of claims 1 to 8, further comprising, before the polymerization step, a step of injecting the mixture into a molding die.

10. The method for producing an optical component resin according to any of claims 1 to 9, wherein the optical component is a spectacle lens substrate.
